# FASCICULE DE BREVET EUROPEEN

(11) **EP 1 086 052 B1**
(45) Date de publication et mention de la délivrance du brevet: **09.04.2003**
(21) Numéro de dépôt: 99902479.7
(22) Date de dépôt: 29.01.1999
(51) Int. Cl.: C02F 11/06, C02F 1/32, F23G 5/10, F23G 5/20, F23G 7/00, A62D 3/00

(54) **TRAITEMENT DE RESIDUES HUMIDES CONTENANT UNE MATIERE ORGANIQUE OXYDABLE**
BEHANDLUNG VON FEUCHTEN RÜCKSTÄNDEN, ENTHALTEND EIN OXIDIERBARES ORGANISCHES MATERIAL.
METHOD FOR TREATING HUMID WASTE CONTAINING AN OXIDABLE ORGANIC MATERIAL

(30) Priorité: 11.05.1998 CA 2237414
(43) Date de publication de la demande: 28.03.2001
(73) Titulaire: HYDRO-QUEBEC, Montréal Québec H2Z 1A4 (CA)
(72) Inventeur: LAFLAMME, Claude B., Cap-de-la-Madeleine, Québec G8W 1X7 (CA); LABRECQUE, Raynald, Shawinigan-Sud, Québec G9P 2A6 (CA)
(74) Mandataire: Casalonga, Axel
(86) Numéro de dépôt international: CA9900079
(87) Numéro de publication internationale: WO99058459

(56) Documents cités:
- WO-A-97/22556
- WO-A-97/44096
- US-A- 4 870 911
- US-A- 5 527 985

## Description

### DOMAINE TECHNIQUE

La présente invention concerne le traitement de résidus contenant une charge polluante et/ou toxique. Plus particulièrement, l'invention vise un procédé de traitement de résidus contenant une matière organique oxydable.

### TECHNIQUE ANTÉRIEURE

Les sociétés d'aujourd'hui requièrent des solutions pratiques pour la gestion des déchets liquides et solides. Entre autres, on exige de la part des industries une réduction à la source des effluents. L'épandage ainsi que l'enfouissement de déchets dans des sites est de moins en moins populaires, et l'incinération dans des grands centres de traitement ne permet pas la valorisation des sous-produits. Les effluents liquides et les boues générés par les industries représentent des quantités importantes de matières organiques et autres produits oxydables. Chaque année, des milliers de tonnes de matières et résidus organiques de toutes sortes constituant des charges à demande chimique d'oxygène sont acheminées vers des usines de traitement ou des sites d'enfouissement. En revanche, un procédé de traitement "sur place" apparaît fort intéressant, surtout si ce même procédé permet la récupération de chaleur et le recyclage de l'eau et des cendres produites.

L'approche conventionnelle qui réside dans une étape de séchage par évaporation, suivie d'une étape d'incinération, est bien éprouvée, mais présente des limitations au niveau du rendement énergétique. Notamment, une grande quantité de chaleur est perdue sous la forme de chaleur sensible par l'air ou les gaz issus du processus de séchage. D'autre part, un grand nombre de procédés conventionnels d'incinération fonctionnent à des températures élevées soit environ 1100°C. Il en résulte que la boue à incinérer doit avoir une siccité élevée ainsi qu'un contenu élevé en matières combustibles, si l'on vise un procédé autothermique. Sinon, il faut avoir recours à des sources d'énergie d'appoint comme des brûleurs au gaz.

Une oxydation à 1100°C requiert beaucoup d'énergie pour chauffer des gaz et de la vapeur d'eau. Ainsi, l'incinération nécessite une source de chaleur telle que le gaz naturel ou le mazout pour initier la réaction et la maintenir, ainsi qu'un apport accrût d'air qu'il faut chauffer car la source de chaleur consomme déjà beaucoup d'oxygène. De plus, à cette température de traitement, les sels et autres composés volatils à ces températures s'échappent de l'incinérateur. Par ailleurs, les cendres, riches en oxydes de métaux alcalins, peuvent former des eutectiques dommageables pour les réfractaires du procédé ou former des amas fondus.

L'enfouissement des boues nécessite de larges surfaces et est de plus en plus réglementé puisqu'il nécessite désormais un contrôle rigoureux à long terme des effluents liquides. Ce processus a l'avantage d'être peu coûteux et d'offrir une solution simple et rapide "en apparence" au problème de disposition de boues. Toutefois, le producteur du déchet demeure toujours responsable des dégâts environnementaux pouvant être causés par ce dernier.

L'épandage a l'avantage de ne pas coûter cher, et constitue souvent une alternative moins dispendieuse que l'enfouissement puisqu'il se fait en surface. On peut épandre facilement des liquides ainsi que des boues à fortes charges organiques. Cependant, il faut que la matière ne soit pas toxique, ne soit pas porteuse de micro-organismes pathogènes et ait un pH équilibré. De plus, il ne faut pas qu'il y ait de contamination des cours d'eau ou de la nappe phréatique par les eaux de lixiviation. Et même si le produit à disposer a des qualités d'engrais, il faut qu'il y ait des sites d'épandage disponibles et autant que possible près du lieu de production pour éviter les frais de transport élevés à cause du volume d'eau important qu'il contient. L'épandage est généralement impopulaire s'il est pratiqué près de quartiers résidentiels à cause des odeurs qui peuvent se développer.

L'approche qui réside dans l'utilisation d'étangs aérés présente le problème de la gestion des boues et celui des espaces requis pour les installations. Ce type de procédé utilise en général des compresseurs pour l'alimentation d'air à travers de buses d'injection. Il y a utilisation d'énergie électrique, mais pas de récupération d'énergie.

Le compostage ne s'applique qu'aux boues contenant de la matière biodégradable. Les boues destinées aux processus de compostage doivent avoir un niveau de siccité suffisamment élevé afin d'éviter l'écoulement de lixiviats. Dans le cas d'une boue contenant trop d'eau, on peut mélanger le liquide ou la boue à de la paille pour assurer une bonne absorption des liquides et une bonne aération du produit, mais ceci a pour effet d'accroître considérablement le volume du produit à traiter, la surface d'entreposage et la durée de traitement. Encore ici, il faut que le produit ne soit pas toxique pour que les micro-organismes de compostage puissent agir efficacement et pour que le compost produit puisse être relâché dans l'environnement sans danger.

Certaines technologies d'oxydation humide en phase supercritique ou en phase liquide/gaz sont disponibles commercialement. Un des principaux freins à l'implantation de ces technologies réside dans les coûts d'investissement requis. Ceci est attribuable à la grosseur et à la complexité des équipements requis. Le procédé d'oxydation supercritique peut s'avérer économiquement attrayant mais n'est utilisable seulement que pour de faibles débits d'effluents à très forte toxicité.

### EXPOSÉ DE L'INVENTION

La présente invention a donc pour but de remédier aux inconvénients ci-haut mentionnés.

Ainsi, l'invention a pour objet un procédé de traitement de résidus contenant une matière organique oxydable. Le procédé selon l'invention est caractérisé par le fait qu'il comprend les étapes suivantes:
a) on introduit les résidus dans un four rotatif pourvu d'un revêtement réfractaire et contenant un matériau caloporteur;
b) on chauffe les résidus en mélange avec le matériau caloporteur à une température comprise entre 300°C et 900°C en présence d'espèces chimiquement actives et de radiation UV générées électriquement, tout en effectuant la rotation du four, de façon à assécher les résidus et causer l'oxydation de la matière organique et la formation de gaz, l'oxydation de la matière organique étant catalysée par les espèces chimiquement actives et la radiation UV; et
c) on évacue les gaz du four.

Le procédé selon l'invention permet le séchage et la destruction par oxydation de la matière organique contenue dans les résidus traités. Il est basé sur l'utilisation d'un réacteur d'oxydation à catalyse électrique, notamment pour le traitement d'effluents à forte teneur en matière organique comme on en trouve dans l'industrie des pâtes et papier, du désencrage de papier ou de textiles, ainsi que dans l'industrie alimentaire. Ainsi, l'électricité est utilisée pour induire des effets catalytiques et aider à des phénomènes de transport dans un réacteur de combustion.

De préférence, l'étape (b) est réalisée au moyen d'une torche à plasma. Il est également possible d'utiliser un dispositif d'arc électrique ou de décharge électrique entre deux électrodes métalliques ou de graphite. Ces appareils permettent non seulement de chauffer les résidus en mélange avec le matériau caloporteur à la température désirée, mais aussi de générer une radiation de type ultraviolet ainsi que des espèces chimiquement actives, telles que des radicaux libres, des ions et des espèces excitées, qui catalysent les réactions d'oxydation. Il s'agit d'une utilisation rationnelle de l'électricité pour la génération de phénomènes d'assistance aux mécanismes de transport et aux réactions chimiques se produisant dans un réacteur d'oxydation. Il en résulte que le processus d'incinération est réalisé dans un réacteur de taille réduite par rapport au procédé d'incinération conventionnel.

Le procédé selon l'invention vise à mettre à profit la valeur calorifique de la matière oxydable contenue dans les résidus à traiter pour aider au processus d'évaporation de l'eau et de destruction thermique de la matière polluante. Dans le cas de boues qui sont suffisamment concentrées (siccité supérieure à 10%), et si le pouvoir calorifique de la matière oxydable est suffisamment élevé, il deviendra possible d'atteindre un régime de fonctionnement autothermique voire exothermique pour le réacteur d'oxydation. Par l'expression "siccité", on entend la proportion massique incluant la matière organique et la matière inorganique excluant l'eau par rapport à la masse totale de résidus humides. Dans le cas des effluents liquides dilués, il suffira de mettre en place des moyens techniques standards pour réaliser une concentration suffisante de cette matière. Ceci inclut l'utilisation de procédés de séparation par membranes, tels que l'osmose inverse, l'ultrafiltration, la nanofiltration et/ou la microfiltration, lesquels sont des procédés de filtration à écoulement tangentiel. Ceci inclut également l'utilisation de procédés de déshydratation mécanique avec ou sans ajout de produits de floculation-coagulation, tels que les centrifuges, les presses à vis, les filtres à tamis, les filtres-presses, les procédés de sédimentation, et autres procédés. Ces procédés de déshydratation pourront ou non être utilisés en conjonction avec des procédés de séparation par membranes tels que mentionnés ci-dessus. Ainsi, le procédé selon l'invention peut être utilisé pour incinérer directement des boues issues de procédés de déshydratation ainsi que les concentrats issus de procédés de séparation par membranes.

L'oxydation est insensible au pH des résidus et à la présence de micro-organismes pathogènes. La décomposition de composés toxiques comme les cyanures ou l'ammoniac n'est pas problématique. De plus, le procédé selon l'invention permet de produire des cendres inorganiques, inertes et stériles pouvant représenter un sous-produit valorisable. Dans le cas du traitement des boues organiques généralement d'origine biologique, les cendres produites peuvent être utilisées dans la formulation de fertilisants puisqu'elles peuvent contenir des nitrates, phosphates et autres composés inorganiques.

Il est également possible de détruire des hydrocarbures polyhalogénés avec fixation des atomes halogènes grâce aux hautes températures locales disponibles par le plasma électrique et à la présence de cendres alcalines dans les solides. L'ajout d'additifs dans les résidus à traiter dans le four en cours de traitement est possible et est recommandé pour fixer certains produits toxiques. La fixation des halogènes se fait généralement par addition d'oxydes, d'hydroxydes ou de carbonates de métaux alcalins ou alcalino-terreux. La fixation des métaux lourds est favorisée par l'addition d'acide phosphorique ou de phosphates et/ou carbonates de métaux alcalins ou alcalino-terreux, tandis que le chrome hexavalent est fixé par addition de sulfate ferreux.

Suivant un mode de réalisation préféré de l'invention, l'étape (b) est réalisée à une température de paroi du four d' environ 500°C. Une température minimum de 300°C est requise pour assurer une réaction d'oxydation spontanée de la matière organique contenue dans les résidus à traiter. À 500°C, il n'y a pas de fusion des solides, pas de frittage, ni formation d'eutectique avec les réfractaires. Toutefois, une certaine agglomération des solides fins est possible due à l'action mécanique de rotation du four, ce qui est souhaitable pour éviter l'entraînement de poussières par les gaz formés au cours de l'étape (b) et assurer une bonne fluidité du caloporteur.

L'étape (b) est généralement réalisée à la pression atmosphérique, soit environ 100 kPa. Il est toutefois possible d'opérer à une pression absolue comprise entre 30 et 600 kPa.

De préférence, le four a une dimension et une géométrie telles à créer un volume interne permettant un temps de résidence des gaz d'au moins 1 seconde de façon à s'assurer que la réaction d'oxydation soit complète à l'intérieur du four. Lorsque les résidus contiennent une matière inorganique, le temps de résidence de la matière inorganique résiduelle (cendres) est généralement supérieur à celui des gaz de façon à assurer un transfert de chaleur adéquat entre les cendres produites et les résidus fraîchement introduits, et à permettre aux cendres de s'accumuler à l'intérieur du four pour constituer le matériau caloporteur. Le niveau de remplissage du four par le matériau caloporteur correspond préférentiellement à 15% du volume interne total.

Par l'expression "matériau caloporteur", on entend un matériau inorganique solide et granuleux dont le diamètre des particules est supérieur à 10 µm. Il sert à uniformiser la chaleur du revêtement réfractaire du four rotatif par contact entre les particules et le revêtement. Il sert aussi à transférer rapidement l'énergie du four aux résidus humides introduits dans le four, en se mélangeant à ceux-ci. Le matériau caloporteur provient de la matière inorganique contenue dans le résidu à traiter qui se dépose sous forme de cendres et s'agglomère, et/ou peut être introduit dans le four si le résidu ne contient pas de matière inorganique ou en est trop pauvre. À titre d'exemples de matériaux caloporteurs pouvant être introduit dans le four, on peut mentionner le sable, les particules d'alumine, les céramiques broyées, etc.

De préférence, on utilise un four ayant une capacité de traitement de plus de 50 kg/h et dont la vitesse tangentielle de rotation au niveau de la paroi interne du four est d'au moins 0.01 m/s mais inférieure à la vitesse de centrifugation du four. Une telle vitesse tangentielle de rotation permet d'assurer une fluidisation du matériau caloporteur, le mélange de ce dernier avec les résidus fraîchement introduits et le transfert de chaleur entre le revêtement réfractaire et le matériau caloporteur.

Le procédé selon l'invention est particulièrement utile pour le traitement de résidus humides ayant une siccité comprise entre 10 et 65% en poids, par rapport au poids total des résidus humides, et contenant une matière inorganique dans une proportion jusqu'à 70% en poids, par rapport au poids total des matières organique et inorganique sans eau, c'est-à-dire, matières sèches. L'utilisation d'un tel type de résidu rend possible son traitement dans des conditions autothermiques.

Un résidu humide ayant une siccité supérieure à 35% peut être traité dans un incinérateur conventionnel. Un résidu humide ayant une siccité inférieure à 10% d'eau est trop dilué et sera mieux traité par un procédé d'oxydation supercritique, d'ozonation ou autres technologies destinées au traitement d'effluents aqueux dilués. Au delà de 70% de matières inorganiques sur une base sèche, le pouvoir calorifique de la matière sèche devient trop faible et ceci oblige d'avoir une siccité nettement supérieure à 65% de façon à assurer des conditions autothermiques.

Le procédé selon l'invention est utile notamment pour le traitement des résidus humides suivants :
a) les eaux à forte toxicité ou à forte charge polluante, provenant de procédés industriels tels que désencrage, textile, tannin, industrie chimique, pâtes et papiers (boues secondaires et liqueur noire), etc.;
b) les boues et les effluents liquides générés dans l'industrie agro-alimentaire, tels que lisiers d'animaux, effluents contenant des graisses, protéines, glucides, etc.;
c) les boues issues de clarificateurs utilisés pour le traitement d'eaux usées;
d) les boues provenant de systèmes de traitement biologique; et
e) les résidus végétaux à forte teneur en eau, notamment la pulpe de plantes telles que le maïs, soja et autres.

### DESCRIPTION SOMMAIRE DES DESSINS

D'autres caractéristiques et avantages de l'invention apparaîtront plus clairement à la lecture de la description ci-après des modes de réalisation préférés de l'invention, faite en référence aux dessins ci-joints, dans lesquels:
la Figure 1 illustre de façon schématique un réacteur d'oxydation à catalyse électrique utilisé pour la mise en oeuvre d'un procédé conforme à l'invention;
la Figure 2 est un graphique représentant une consommation énergétique typique en fonction de la siccité du résidu humide (sans cendres) à traiter, ayant un pouvoir calorifique de 20 000 kJ/kg de matières organiques, pour différentes températures de paroi interne du four; et
la Figure 3 est un graphique représentant une consommation énergétique typique en fonction de la siccité du résidu humide (sans cendres) à traiter pour différentes valeurs de pouvoir calorifique de la matière organique contenue dans le résidu humide, dans le four porté à 500°C.

### MANIÈRES DE RÉALISER L'INVENTION

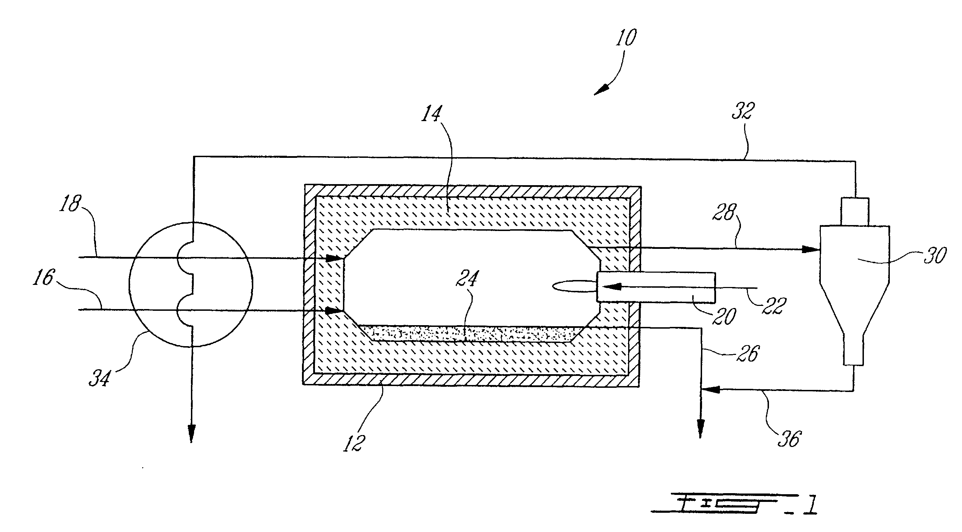

Le réacteur d'oxydation à catalyse électrique qui est illustré dans la Figure 1 et désigné de façon générale par le numéro de référence 10 comprend un four rotatif 12 pourvu d'un revêtement réfractaire 14 et comportant des moyens de rotation (non illustrés). Les résidus humides à traiter et contenant une charge organique sont introduits dans le four 12 par le conduit 16, alors que l'air ou l'oxygène requis pour oxyder la charge organique est introduit par le conduit 18. Le four 12 est chauffé au moyen d'une torche à plasma 20 qui génère des espèces chimiquement actives ainsi qu'une radiation de type UV servant à catalyser les réactions d'oxydation. Un gaz plasmagène constitué par de l'oxygène, de l'hydrogène, de l'argon, de l'azote, du méthane, du monoxyde de carbone, du bioxyde de carbone ou de la vapeur d'eau, ou bien d'un mélange de ceux-ci, est introduit par le conduit 22. Le gaz plasmagène est préférablement une partie de l'air requis pour oxyder la charge organique, le reste de l'air étant introduit par le conduit 18. L'apport d'air est réduit au minimum mais suffisant pour oxyder partiellement ou en entier la charge organique, ce qui évite des pertes inutiles d'énergie sous la forme de chaleur sensible dans un surplus d'azote provenant d'une trop grande quantité d'air. Ceci permet aussi de diminuer le débit des gaz produits dans le réacteur, ce qui aide à optimiser le temps de résidence des gaz dans le réacteur, lequel doit être d'au moins d'une seconde. Il est suggéré d'utiliser un léger surplus d'air de 10% en volume par rapport au minimum d'air requis pour oxyder la charge organique afin d'assurer une meilleure réactivité entre la matière oxydable et l'oxygène. L'oxyde d'azote qui peut être produit par la torche à plasma 20 est détruit par la charge organique gazeuse en présence de laquelle il est instable. De préférence, l'énergie spécifique fournie par la torche à plasma s'établit entre 50 et 200 kWh/t de résidus humides.

Le procédé est conçu pour être opéré en mode continu. D'une part, les résidus humides et le gaz oxydant sont introduits dans le four en continu afin de garder constants les émissions gazeuses et les flux thermiques. Les cendres 24 qui s'accumulent dans le four servent d'agent de transfèrt thermique ou de matériau caloporteur entre les résidus fraîchement introduits et la surface interne du revêtement interne 14 du four; le surplus est évacué par débordement au moyen du conduit 26. Il est toutefois possible d'opérer le procédé en mode semi-continu en interrompant périodiquement le procédé pour retirer les matières inorganiques qui se sont accumulées.

La vapeur d'eau et les gaz générés par l'oxydation de la charge organique sont évacués par le conduit 28. Un cyclone 30 est prévu à la sortie des gaz pour capter les cendres entraînées par les gaz. Une partie de la chaleur des gaz de sortie 32 peut être récupérée par un échangeur de chaleur 34, pour préchauffer les résidus à traiter et l'air qui est utilisé comme camburant, voire même pour un séchage partiel des résidus, dans le but d'augmenter l'efficacité thermique du procédé. Les cendres volantes, séparées du gaz par le cyclone 30 sont évacuées par la conduite 36.

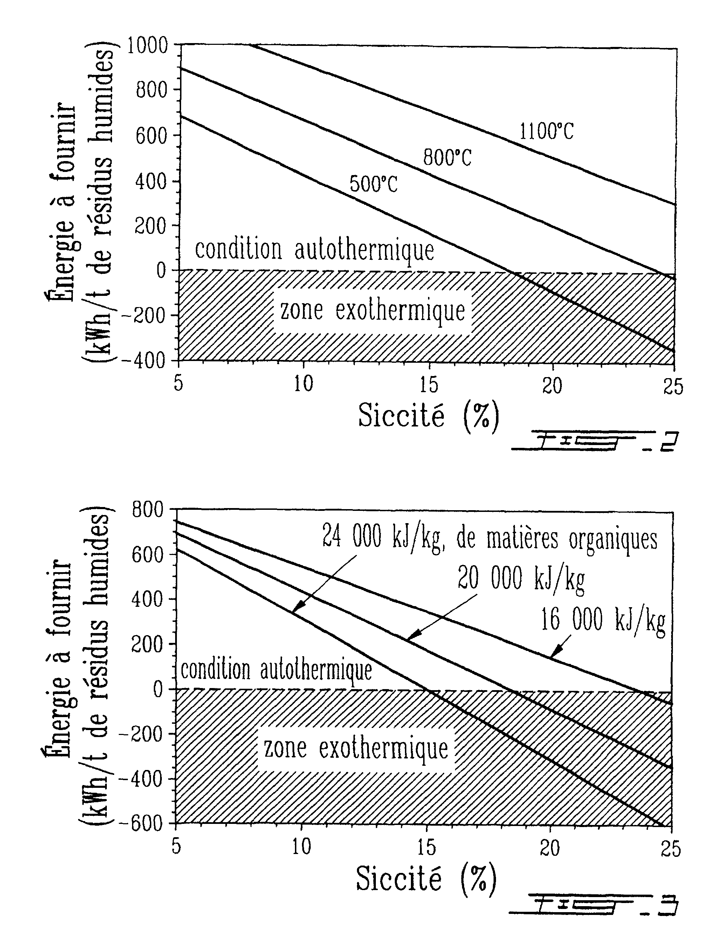

La Figure 2 illustre l'effet de la température du four 12, dans le cas où la matière organique ne contient pas de cendres et a un pouvoir calorifique de 20,000 kJ/kg sur une base sèche. Cette figure montre que dans le cas de résidus suffisamment concentrés (siccité supérieure à 10%), si le pouvoir calorifique de la matière oxydable est suffisamment élevé, il est possible d'atteindre un régime de fonctionnement autothermique, voire exothermique, pour le réacteur d'oxydation.

La Figure 3 illustre l'effet du pouvoir calorifique de la matière sèche, avec 0% de cendres et une température de traitement de 500°C. Cette figure montre que pour approcher ou atteindre des conditions autothermiques, voire exothermiques, la siccité critique dépend du pouvoir calorifique de la matière organique.

Il convient de remarquer que les Figures 2 et 3 ne tiennent pas compte d'une récupération possible d'énergie des gaz chauds sortant du four, qui aurait pour effet d'abaisser la siccité critique pour atteindre les conditions autothermiques.

## Revendications

1. Procédé de traitement de résidus humides contenant une matière organique oxydable, **caractérisé par le fait qu'**il comprend les étapes suivantes:
a) on introduit lesdits résidus dans un four rotatif (12) pourvu d'un revêtement réfractaire (14) et contenant un matériau caloporteur (24) ;
b) on chauffe lesdits résidus en mélange avec ledit matériau caloporteur (24) à une température comprise entre 300°C et 900°C en présence d'espèces chimiquement actives et de radiation UV générées électriquement, tout en effectuant la rotation du four (12), de façon à assécher lesdits résidus et causer l'oxydation de ladits matière organique et la formation de gaz, ladite oxydation étant catalysée par les espèces chimiquement actives et la radiation UV; et
c) on évacue les gaz du four.

2. Procédé selon la revendication 1, **caractérisé par le fait que** l'étape (b) est réalisée à une température de paroi interne du four (12) d'environ 500°C.

3. Procédé selon la revendication 1, **caractérisé par le fait que** l'étape (b) est réalisée à une pression absolus comprise entre 30 et 600 kPa.

4. Procédé selon la revendication 3, **caractérisé par le fait que** l'étape (b) est réalisée à une pression absolue d'environ 100 kPa.

5. Procédé selon la revendication 1, **caractérisé par le fait que** le four a une dimension et une géométrie telles à créer un volume interne permettant un temps de résidence des gaz d'au moins 1 seconde.

6. Procédé selon la revendication 1, **caractérisé par** la fait que lesdits résidus contiennent une matière inorganique et que le four a une géométrie telle à permettre un temps de résidence de la matière inorganique résiduelle d'au moins 1 seconde.

7. Procédé selon la revendication 1, **caractérisé par le fait que** le four (12) a une paroi interne et qu'il tourne de façon à générer une vitesse tangentielle à la paroi interne d'au moins 0.01 m/s, et qu'il a une capacité de traitement de plus de 50 kg/h.

8. Procédé selon la revendication 1, **caractérisé par le fait que** l'étape (b) est réalisée au moyen d'une torche à plasma.

9. Procédé selon la revendication 8, **caractérisé par le fait que** la torche à plasma (20) comprend un gaz plasmagène choisi dans le groupe constitué par l'oxygène, l'hydrogène, l'argon, l'azote, le méthane, le monoxyde de carbone, le bioxyde de carbone, la vapeur d'eau et leurs mélanges.

10. Procédé selon la revendication 1, **caractérisé par le fait que** l'étape (b) est réalisée au moyen d'un dispositif d'arc électrique ou de décharge électrique entre deux électrodes métalliques ou de graphite.

11. Procédé selon la revendication 1, **caractérisé par le fait que** lesdits résidus ont une siccité comprise entre 10 et 65% en poids, par rapport au poids total des résidus humides, et qu'ils contiennent une matière inorganique dans une proportion jusqu'à 70% en poids, par rapport au poids total des matières organique et inorganique sans eau.

12. Procédé selon la revendication 1, **caractérisé par le fait que** lesdits résidus ont une siccité supérieure à 65% en poids, par rapport au poids total des résidus humides, et qu'ils contiennent une matière inorganique dans une proportion supérieure à 70% en poids, par rapport au poids total des matières organique et inorganique sans eau.

13. Procédé selon la revendication 1, **caractérisé par le fait que** lesdits résidus contiennent un produit toxique et qu'avant l'étape (a), on ajoute auxdits résidus un composé chimique destiné à fixer ledit produit toxique.

14. Procédé selon la revendication 13, **caractérisé par le fait que** ledit composé chimique est choisi dans le groupe constitué par l'acide phosphorique, le sulfate ferreux, les oxydes, les hydroxydes, les carbonates et les phosphates de métaux alcalins ou alcalino-terreux.

15. Procédé selon la revendication 1, **caractérisé par le fait que** lesdits résidus sont constitués par des boues ou effluents liquides à forte toxicité ou à forte charge polluante, provenant d'un procédé industriel.

16. Procédé selon la revendication 1, **caractérisé par le fait que** lesdits résidus sont constitués par des boues et effluents liquides générés dans l'industrie agro-alimentaire.

17. Procédé selon la revendication 1, **caractérisé par le fait que** lesdits résidus sont constitués par des boues issues d'un clarificateur utilisé pour le traitement d'eaux usées.

18. Procédé selon la revendication 1, **caractérisé par le fait que** lesdits résidus sont constitués par des boues provenant d'un système de traitement biologique.

19. Procédé selon la revendication 1, **caractérisé par le fait que** lesdits résidus sont des résidus à forte teneur en eau.

## Claims

1. Process for the treatment of wet waste comprising oxidizable organic matter, **characterized in that** it comprises the following stages:
a) the said waste is introduced into a rotary kiln (12) provided with a refractory lining (14) and comprising a heat-exchange material (24);
b) the said waste, as a mixture with the said heat-exchange material (24), is heated at a temperature of between 300°C and 900°C in the presence of chemically active species and of UV radiation which are electrically generated, while rotating the kiln (12), so as to dry the said waste and to bring about the oxidation of the said organic matter and the formation of gases, the said oxidation being catalysed by the chemically active species and the UV radiation; and
c) the gases are discharged from the kiln.

2. Process according to Claim 1, **characterized in that** stage (b) is carried out at an internal wall temperature of the kiln (12) of approximately 500°C.

3. Process according to Claim 1, **characterized in that** stage (b) is carried out at an absolute pressure of between 30 and 600 kPa.

4. Process according to Claim 3, **characterized in that** stage (b) is carried out at an absolute pressure of approximately 100 kPa.

5. Process according to Claim 1, **characterized in that** the kiln has a size and a geometry such as to create an internal volume which makes possible a residence time of the gases of at least 1 second.

6. Process according to Claim 1, **characterized in that** the said waste comprises inorganic matter and **in that** the kiln has a geometry such as to make possible a residence time of the residual inorganic matter of at least 1 second.

7. Process according to Claim 1, **characterized in that** the kiln (12) has an internal wall and **in that** it rotates so as to generate a tangential speed at the internal wall of at least 0.01 m/s, and **in that** it has a treatment capacity of more than 50 kg/h.

8. Process according to Claim 1, **characterized in that** stage (b) is carried out by means of a plasma torch.

9. Process according to Claim 8, **characterized in that** the plasma torch (20) comprises a plasma gas chosen from the group consisting of oxygen, hydrogen, argon, nitrogen, methane, carbon monoxide, carbon dioxide, steam and their mixtures.

10. Process according to Claim 1, **characterized in that** stage (b) is carried out by means of an electric arc or electric discharge device in which an electric arc or electric discharge occurs between two metal or graphite electrodes.

11. Process according to Claim 1, **characterized in that** the said waste has a dryness of between 10 and 65% by weight, with respect to the total weight of the wet waste, and **in that** it comprises inorganic matter in a proportion of up to 70% by weight, with respect to the total weight of the water-free organic and inorganic matter.

12. Process according to Claim 1, **characterized in that** the said waste has a dryness of greater than 65% by weight, with respect to the total weight of the wet waste, and **in that** it comprises inorganic matter in a proportion of greater than 70% by weight, with respect to the total weight of the water-free organic and inorganic matter.

13. Process according to Claim 1, **characterized in that** the said waste comprises a toxic product and **in that**, before stage (a), a chemical compound intended to fix the said toxic product is added to the said waste.

14. Process according to Claim 13, **characterized in that** the said chemical compound is chosen from the group consisting of phosphoric acid, ferrous sulphate, alkali metal oxides, hydroxides, carbonates and phosphates, and alkaline earth metal oxides, hydroxides, carbonates and phosphates.

15. Process according to Claim 1, **characterized in that** the said waste is composed of sludges or liquid effluents of high toxicity or with a high pollution load originating from an industrial process.

16. Process according to Claim 1, **characterized in that** the said waste is composed of sludges and liquid effluents generated in the food-processing industry.

17. Process according to Claim 1, **characterized in that** the said waste is composed of sludges resulting from a settling tank used for wastewater treatment.

18. Process according to Claim 1, **characterized in that** the said waste is composed of sludges originating from a biological treatment system.

19. Process according to Claim 1, **characterized in that** the said waste is [lacuna] waste with a high water content.

## Patentansprüche

1. Verfahren zur Behandlung von feuchten Rückständen, die ein oxidierbares organisches Material enthalten, **dadurch gekennzeichnet, daß** es die folgenden Stufen umfaßt:
a) man führt diese Rückstände in einen Drehrohrofen (12) ein, der mit einer feuerfesten Auskleidung (14) versehen ist und ein wärmeabführendes Material (24) enthält,
b) man erhitzt diese Rückstände in Mischung mit diesem wärmeabführenden Material (24) auf eine Temperatur zwischen 300°C und 900°C in Anwesenheit von chemisch aktiven Stoffen und von elektrisch erzeugter UV-Strahlung immer unter Betreiben der Drehung des Ofens (12) derart, daß diese Rückstände getrocknet und die Oxidation dieses organischen Materials und die Bildung von Gas herbeigeführt werden, wobei diese Oxidation durch die chemisch aktiven Stoffe und die UV-Strahlung katalysiert wird, und
c) man evakuiert die Gase aus dem Ofen.

2. Verfahren nach Anspruch 1, **dadurch gekennzeichnet, daß** die Stufe (b) bei einer Temperatur der inneren Wand des Ofens (12) von ungefähr 500°C ausgeführt wird.

3. Verfahren nach Anspruch 1, **dadurch gekennzeichnet, daß** die Stufe (b) bei einem Absolutdruck zwischen 30 und 600 kPa ausgeführt wird.

4. Verfahren nach Anspruch 3, **dadurch gekennzeichnet, daß** die Stufe (b) bei einem Absolutdruck von ungefähr 100 kPa ausgeführt wird.

5. Verfahren nach Anspruch 1, **dadurch gekennzeichnet, daß** der Ofen eine solche Dimension und eine solche Geometrie hat, um ein inneres Volumen zu ergeben, das eine Aufenthaltszeit der Gase von wenigstens 1 Sekunde erlaubt.

6. Verfahren nach Anspruch 1, **dadurch gekennzeichnet, daß** diese Rückstände ein anorganisches Material enthalten und daß der Ofen eine solche Geometrie hat, um eine Aufenthaltszeit des anorganischen Materials von wenigstens 1 Sekunde zu erlauben.

7. Verfahren nach Anspruch 1, **dadurch gekennzeichnet, daß** der Ofen (12) eine innere Wand hat und daß er sich derart dreht, um eine Tangentialgeschwindigkeit an der inneren Wand von wenigstens 0,01 m/s zu erzeugen, und daß er eine Behandlungskapazität von mehr als 50kg/h besitzt.

8. Verfahren nach Anspruch 1. **dadurch gekennzeichnet, daß** die Stufe (b) mittels einer Plasmafackel ausgeführt wird.

9. Verfahren nach Anspruch 8, **dadurch gekennzeichnet, daß** die Plasmafackel (20) ein Plasmagas umfaßt, das aus der durch Sauerstoff, Wasserstoff, Argon, Stickstoff, Methan, Kohlenmonoxid, Kohlendioxid, Wasserdampf und ihren Mischungen gebildeten Gruppe ausgewählt ist.

10. Verfahren nach Anspruch 1, **dadurch gekennzeichnet, daß** die Stufe (b) mittels einer Elektrolichtbogenvorrichtung oder einer Vorrichtung zur elektrischen Entladung zwischen zwei Metall- oder Graphitelektroden ausgeführt wird.

11. Verfahren nach Anspruch 1, **dadurch gekennzeichnet, daß** diese Rückstände eine Trockenheit zwischen 10 und 65 Gew.-%, bezogen auf das Gesamtgewicht der feuchten Rückstände, haben, und daß sie ein anorganisches Material in einem Anteil bis zu 70 Gew.-%, bezogen auf das Gesamtgewicht der organischen und anorganischen Materialien ohne Wasser, enthalten.

12. Verfahren nach Anspruch 1, **dadurch gekennzeichnet, daß** diese Rückstände eine Trockenheit oberhalb von 65 Gew.-%, bezogen auf das Gesamtgewicht der feuchten Rückstände, haben, und daß sie ein anorganisches Material in einem Anteil oberhalb von 70 Gew.-%, bezogen auf das Gesamtgewicht der organischen und anorganischen Materialien ohne Wasser, enthalten.

13. Verfahren nach Anspruch 1, **dadurch gekennzeichnet, daß** diese Rückstände ein toxisches Produkt enthalten und daß man vor der Stufe (a) zu diesen Rückständen eine chemische Verbindung zusetzt, die zum Fixieren dieses toxischen Produktes bestimmt ist.

14. Verfahren nach Anspruch 13, **dadurch gekennzeichnet, daß** diese chemische Verbindung aus der durch Phosphorsäure, Eisen-(II)-sulfat, die Oxide, die Hydroxide, die Karbonate und die Phosphate von Alkali- oder Erdalkimetallen gebildeten Gruppe ausgewählt ist.

15. Verfahren nach Anspruch 1, **dadurch gekennzeichnet, daß** diese Rückstände durch Schlämme oder flüssige Austrittsströmungen mit starker Toxizität oder starker Verunreigungsbeladung, die aus einem industriellen Verfahren stammen, gebildet werden.

16. Verfahren nach Anspruch 1, **dadurch gekennzeichnet, daß** diese Rückstände durch Schlämme und flüssige Austrittsströmungen, die in der Agro-Ernährungsindustrie erzeugt werden, gebildet werden.

17. Verfahren nach Anspruch 1, **dadurch gekennzeichnet, daß** diese Rückstände durch Schlämme, die aus einer Kläranlage zur Behandlung von Abwässern stammen, gebildet werden.

18. Verfahren nach Anspruch 1, **dadurch gekennzeichnet, daß** diese Rückstände durch Schlämme, die aus einem System zur biologischen Behandlung stammen, gebildet werden.

19. Verfahren nach Anspruch 1, **dadurch gekennzeichnet, daß** diese Rückstände Rückstände mit einem hohen Wassergehalt sind.
